# EUROPEAN PATENT SPECIFICATION

(11) **EP 2 790 939 B1**
(45) Date of publication and mention of the grant of the patent: **01.05.2019**
(21) Application number: 12801533.6
(22) Date of filing: 07.12.2012
(51) Int. Cl.: B60H 1/00, B64D 13/08, B61D 27/00, B60H 1/22, B64D 13/00, B64D 13/06

(54) **TEMPERATURE REGULATION OF HEATED AIR DISTRIBUTION SYSTEMS IN PASSENGER ROOMS**
TEMPERATURREGELUNG VON SYSTEMEN ZUR VERTEILUNG ERWÄRMTER LUFT IN PASSAGIERRÄUMEN
RÉGULATION DE TEMPÉRATURE DE SYSTÈMES DE DISTRIBUTION D'AIR CHAUFFÉ DANS LES PIÈCES POUR PASSAGERS

(30) Priority: 14.12.2011 DE 102011121053; 14.12.2011 US 201161570388 P
(43) Date of publication of application: 22.10.2014
(73) Proprietor: Airbus Operations GmbH, 21129 Hamburg (DE)
(72) Inventor: EVERTH, Henning, 22763 Hamburg (DE)
(74) Representative: LKGLOBAL Lorenz & Kopf PartG mbB Patentanwälte
(86) International application number: PCT/EP2012/074824
(87) International publication number: WO 2013/087534

(56) References cited:
- EP-A1- 1 550 569
- WO-A1-2005/063575
- WO-A1-2005/063578
- US-A1- 2008 168 786

## Description

### Reference to related applications

This application claims the benefit of the filing date of German Patent Application No. 10 2011 121 053.2 filed December 14, 2011 and of United States Provisional Patent Application No. 61/570,388 filed December 14, 2011.

### Technical field

The invention relates to a passenger compartment with an air distribution system. In particular, the invention relates to a passenger compartment with an air distribution system for a means of transport, to a means of transport with a passenger compartment, to a method for regulating an air outlet temperature of an air distribution system in a passenger compartment of a means of transport, to a computer program element for controlling an air distribution system, and to a computer-readable medium.

### Background

Passenger compartments with air distribution systems and air distribution systems in passenger cabins of means of transport are, for example, used to supply passengers with fresh air, and to set a desired cabin temperature in that from a multitude of air outlets in the passenger cabin correspondingly temperature-controlled or air conditioned air flows. To this effect the air outlets are distributed in the passenger cabin in such a manner that to the greatest extent possible they may achieve room-covering air distribution and a uniform temperature in the passenger cabin.

From EP 1 550 569 A1 and US 2005/0230488 A1 a passenger compartment with an air distribution system is known that comprises a multitude of air outlets that are divided into several temperature zones. Each air outlet comprises a heating element that heats the air flowing from the air outlet so that within a temperature zone a prevailing temperature can be specified.

Within a temperature zone the temperature can be regulated independently of an adjoining temperature zone, in that, for example, several temperature sensors, which are arranged in the temperature zone, acquire the cabin temperature, and a regulating device influences the air temperature at the air outlets by adjusting the heating energy of the heating elements.

US 2008/0168786 A1 describes a flexible aircraft air-conditioning system for a flexible aircraft cabin and is considered as closest prior art. This reference relates to a method and a device for air-conditioning an aircraft cabin, which comprises a first zone and a second zone of variable length and at least one intermediate zone. The at least one intermediate zone may be associated with the first zone or the second zone. Air at a first set temperature is supplied to the first zone via a first supply line. Air at a second set temperature is supplied to the second zone via a second supply line. In at least one intermediate zone air is supplied via an intermediate zone supply line associated therewith. If the at least one intermediate zone is associated with the first zone is, the set temperature of the air supplied to the intermediate zone corresponds substantially to the set temperature of the air supplied to the first zone. If the at least one intermediate zone is associated with the second zone. the set temperature of the air supplied to the intermediate zone corresponds substantially to the set temperature of the air supplied to the second zone.

### Summary of the invention

It may be considered to be an object of the invention to provide for a passenger compartment with an air distribution system that allows the implementation of alternative temperature regulation in a temperature zone with little construction expenditure.

This object is achieved by the subject-matter of independent claims 1 and 8. Stated are a passenger compartment with an air distribution system for a means of transport, a means of transport, a method, a computer program element, and a computer-readable medium. Exemplary embodiments of the invention are stated in the subordinate claims and in the following description.

Many of the characteristics described below with respect to the passenger compartment may also be implemented as method-related steps and vice-versa.

According to a first aspect of the invention, a passenger compartment with an air distribution system for a means of transport is stated, which air distribution system comprises a control unit, a multitude of air outlets, and at least one heating element. The passenger compartment comprises at least one temperature zone with a first temperature region and a second temperature region, wherein the first temperature region is designed to receive a first heat load, and the second temperature region is designed to receive a second heat load, which first heat load differs from the second heat load, wherein the at least one temperature zone comprises the multitude of air outlets, which multitude of air outlets share a common air supply. In this arrangement the at least one heating element is associated with one of the air outlets in order to heat the air flowing from the one air outlet, which one air outlet is arranged in that temperature region of the first temperature region and of the second temperature region, which temperature region comprises a lower heat load. The control unit is designed to determine a temperature in the at least one temperature zone, and to calculate or determine the heating energy for the at least one heating element. A first group of the air outlets in the first temperature region is designed to output air of a first air outlet temperature to the passenger compartment, and a second group of the air outlets in the second temperature region is designed to outlet air of a second air outlet temperature to the passenger compartment. In this arrangement the control unit is designed to calculate the heating energy for the at least one heating element in such a manner that in the first temperature zone a temperature that is as uniform as possible is achieved.

In this arrangement, in each case one or several heating elements can be associated with, or allocated to, one air outlet, or one or several heating elements can be associated with, or allocated to, a multitude of air outlets.

In this document the term "temperature zone" refers to a region of the passenger compartment in which region all the air outlets share a common air supply and common temperature regulation. In this arrangement a passenger compartment can, in particular, comprise a multitude of temperature zones.

Furthermore, a temperature zone is characterized in that regulation of the temperature in a temperature zone is carried out by a single control loop. This means that the control loop is supplied by a temperature sensor with a measured value that reflects the temperature in the corresponding temperature zone, and, corresponding to the setting of the control loop, the heating energy for the heating elements or the air outlet temperature is adjusted in order to in the case of a temperature value that differs from the setpoint value of the temperature cause a change in the air outlet temperature so that the temperature in the temperature zone changes to a desired direction i.e., depending on the heat load in the temperature region, is increased or decreased. It should be pointed out that the desired air outlet temperature can be brought about both by means of the heating elements and directly by adjusting the temperature of the air in the shared air supply of a temperature zone.

The air distribution system as described above and below may make it possible, in particular, that within a temperature zone a temperature is as uniform as possible, although, for example, a heat load within the temperature zone differs.

The term "heat load" refers to all the influences on the temperature in a temperature zone or in various temperature regions of a temperature zone.

For example, passenger density can have an effect on the heat load to the extent that in the case of a comparatively high passenger density a comparatively high heat load is experienced because the body warmth given off by the passengers can result in an increase in the temperature in the affected region. Conversely, a comparatively low passenger density may result in a comparatively low heat load.

Apart from the passenger density, for example placement of an entrance or an exit to or from the passenger compartment, e.g. an emergency exit door of an aircraft cabin, may also affect the heat load.

The seal of the emergency exit or the door of the emergency exit may represent a cold bridge, for example because of differences in the material used when compared to the material and the nature of the aircraft cabin, and thus can result in a drop in temperature in the immediate vicinity of the emergency exit, which in turn reduces the heat load in the region affected by this. Likewise, the heat load in a region of the passenger cabin may be influenced by the cabin insulation.

A different heat load in an individual temperature zone may thus result in the temperature within the temperature zone not being uniform, and thus in different temperature regions within the temperature zone arising. In particular, the temperature within a temperature zone may fluctuate when the air outlet temperature is uniform in the entire temperature zone, but the heat load in this temperature zone is not uniform.

A temperature region is characterized in that, as a result of the prevailing heat load, the temperature within the temperature region differs from the temperature in an adjacent temperature region within the same temperature zone. If in the case of different heat loads in two temperature regions within a temperature zone the air outlet temperature at the air outlets is identical, this results in either the temperature in the temperature region with a high heat load being too high, or the temperature in the temperature region with a low heat load being too low.

A temperature region is a spatially defined or delimited region within a temperature zone, wherein this region requires a defined temperature of the air flowing from the air outlets in order to achieve a desired ambient temperature in this temperature region or sphere.

Either an increased temperature or a reduced temperature in a passenger cabin can reduce the travelling comfort of passengers. In particular an increased temperature can, for example, in air travel result in circulatory problems in passengers, whereas a reduced temperature results in passengers being cold or feeling unwell.

In order to prevent temperature differentials within a temperature zone, i.e. different temperatures in different temperature regions within one and the same temperature zone due to a varying heat load, a heating element in an air outlet is supplied with heating energy in such a manner that the air outlet temperature in the air outlet is increased or decreased according to the heat load, wherein in the case of a high heat load the air outlet temperature is to be lower than in the case of a low heat load.

The air distribution system as described above and below is thus in particular suited to distributing air in a passenger compartment of an aircraft if, for example, various seating configurations or seating layouts exist within a temperature zone.

The seating configuration in a passenger compartment specifies the way the passenger seats are distributed and the spacing between seats. For example, in air travel there are various seating configurations in business class and economy class, wherein parameters such as passenger legroom are influenced by means of the seating configuration.

Generous spacing between seats results in low passenger density, which in turn results in a low heat load in the corresponding region, for example in business class. Conversely, in economy class, small spacing between seats results in higher passenger density and in a higher heat load.

In order to, in the case of different passenger densities, achieve the same temperature in the entire passenger compartment, a region with a low heat load needs to be supplied at a higher air outlet temperature by way of the air outlets, and a region with a high heat load is correspondingly supplied with a lower air outlet temperature by way of the air outlets.

As long as a temperature zone comprises a uniform seating configuration and thus a uniform passenger density, the temperature of each temperature zone can be suitably regulated by way of an identical air outlet temperature of the air outlets in the corresponding temperature zone. However, if a temperature zone does not have a uniform heat load, i.e. the temperature zone comprises several temperature regions with different local heat loads, a uniform temperature can only be achieved by way of different air outlet temperatures in the air outlets of the various temperature regions.

The air distribution system as described above and below makes it possible to set the air outlet temperature of the air outlets in various temperature regions of a temperature zone in that reaction to the local heat load within a temperature region takes place, in that the heating energy relating to the heating elements in the air outlets is set in such a manner that in the entire temperature zone as uniform a temperature as possible is achieved.

A temperature is as uniform as possible if a human passenger cannot perceive a significant temperature difference within a temperature zone by means of the body's own sensor system. A temperature difference will be significant in those cases where the difference exceeds, for example, 1° to 2° Kelvin.

The local heat load in a temperature region can, for example, result from the seating configuration and/or the actually occupied seats in the passenger compartment. The actually occupied passenger seats could, for example, be determined in that each seat comprises a sensor that emits a signal to the control unit when the seat is occupied.

From the seating configuration and/or the number of actually occupied seats the control unit can, for example, determine a heat load in a temperature region. The air distribution system as described above and below makes it possible to set the heating energy at the heating elements of the air outlets after determination of the heat load in a first temperature region and after determination of the temperature and of the heat load in a second temperature region of a temperature zone.

However, adjustment of the air outlet temperature can, for example, also take place by means of an individual heating element in the shared air supply or generally by correspondingly heated air from the air supply of all the air outlets. Preferably, in this case the air outlets are arranged within an individual temperature region. In this case the air outlet temperature of the heating element in the air supply could be specified such that for example in the second temperature region no heating elements are required in the air outlets in order to bring about the desired temperature in the corresponding temperature zone. Heating elements are then only arranged in the air outlets of the first temperature region because, for example, in the first temperature region the respective local heat load is lower than in the second temperature region, and thus additional heating energy in the air outlets is necessary in order to achieve the same temperature in the first temperature region as in the second temperature region.

For example, a temperature zone that comprises business class and economy class seating configurations could comprise heating elements only in the region of business class, because the seating configuration in business class results in a lower heat load than in economy class, and thus greater heating energy could be required in order to achieve the same temperature in the two seating classes.

In an embodiment the heating energy for the seats or seat rows of business class, which are situated in a temperature zone together with seats or seat rows of economy class, can be determined in that the second air outlet temperature in a second temperature zone, which second temperature zone only comprises business class seats, is used, and the difference in the air outlet temperature from the first air outlet temperature in a first temperature zone, which first temperature zone regulates the air outlet temperature for economy class, is determined. From the thus determined difference in the air outlet temperature it is then possible to determine a required heating energy for the heating elements in the business class region in the second temperature zone, because it is known that the heat load in the second temperature zone, i.e. in business class, is the same as in the first temperature region of the second temperature zone, i.e. in the seat rows of business class, which seat rows are situated in the second temperature zone.

According to a further embodiment of the invention, the passenger compartment comprises at least one temperature sensor, wherein each one of the at least one temperature zones is associated with precisely one temperature sensor designed to measure the temperature in the temperature zone associated with it, and to transmit the result to the control unit. This temperature sensor is a temperature sensor for acquiring an ambient temperature.

Apart from this, each temperature zone can also comprise a temperature sensor for acquiring the air outlet temperature, because the air outlet temperature can be necessary for determining the necessary heating energy in temperature zones comprising several temperature regions.

In this manner the air distribution system may make it possible for a temperature zone to comprise a single temperature sensor and a single control loop for the temperature, while nevertheless, by way of a knowledge of the heat load or of the distribution of the heat load within a temperature zone, allowing various air outlet temperatures at the air outlets of the individual temperature regions to be set in such a manner that the temperature within the entire temperature zone is as uniform as possible.

In this arrangement the air outlets within the first temperature region form part of the first group, and the air outlets within the second temperature region form part of the second group of air outlets, wherein the first group and the second group of air outlets comprise different air outlet temperatures.

According to the invention, the control unit furthermore calculates the heating energy of the heating elements depending on the temperature measured by the temperature sensor.

As already explained, a temperature zone comprises only one temperature sensor for acquiring the ambient temperature, which temperature sensor can naturally be situated only in one temperature region. Thus the actually predominant temperature in a second temperature region cannot be measured. Instead, the control unit is designed, by way of the temperature in the first temperature region and the heat load in the first temperature region as well as the heat load in the second temperature region, to calculate the required heating energy for the heating elements in the second temperature region in such a manner that in the second temperature region a desired temperature is achieved.

According to a further embodiment of the invention, the temperature sensor associated with the at least one temperature zone is arranged in or associated with that temperature region that comprises a higher heat load than another temperature region within the same temperature zone. This can, for example, be the second temperature region, which has a higher heat load than the first temperature region of the temperature zone in which the first temperature region and the second temperature region are situated.

Arranging the temperature sensor in the temperature region with a higher heat load may make it possible for, and support, a predetermined temperature in this temperature region not being exceeded. For example in air travel exceeding defined temperature limits can result in passengers experiencing circulatory problems. Maintaining such a predetermined maximum temperature can be facilitated in that the measuring signal of the temperature is precisely emitted in that temperature region which due to the higher heat load is more likely to be inclined to assume too high a temperature.

According to a further embodiment of the invention, the passenger compartment comprises a first temperature zone and a second temperature zone, each comprising a multitude of air outlets, wherein the first temperature region of the first temperature zone adjoins the second temperature zone, and wherein the first heat load in the first temperature region of the first temperature zone corresponds to the heat load in the second temperature zone and is lower than the second heat load of the second temperature region of the first temperature zone, and the heating energy in the first temperature region of the first temperature zone results from a heat load differential between the second heat load of the second temperature region of the first temperature zone and the heat load of the second temperature zone.

The first temperature zone and the second temperature zone can thus, in particular, be temperature zones that are arranged side-by-side or adjacent to each other within the passenger cabin, wherein in one of these temperature zones a varying heat load can arise in that, for example, the seating configuration of the second temperature zone is extended to seat rows of the first temperature zone. In this document the notion of the first temperature zone being adjacent to the second temperature zone means that, for example, in two passenger seat rows, situated one behind another, within the passenger compartment, the air outlets associated with the respective passenger seat rows are in each case associated with a temperature zone, i.e. for example the first and the second temperature zones. Thus one of the passenger rows that are situated directly one behind another is supplied by air outlets of the first temperature zone, while the other passenger seat row is supplied by air outlets of the second temperature zone.

According to a further embodiment of the invention, the heat load of a temperature region is predetermined by, or derived from, a passenger density in the corresponding temperature region, wherein an increased passenger density corresponds to an increased heat load of the temperature region.

According to a further embodiment of the invention, the heat load of a temperature region is predetermined by, or derived from, a passenger seat distribution in a temperature region, wherein an increased passenger seat density corresponds to an increased heat load of the temperature region.

In contrast to the passenger density, which indicates the seats that are actually occupied by persons, the passenger seat distribution does not indicate whether the seats are actually taken up by persons. Thus even in the case of identical passenger seat density, passenger density can nevertheless result in a different heat load being determined, because it is quite possible that not every seat is taken up by a passenger.

According to a further aspect of the invention, a means of transport with a passenger compartment as described above and below is stated.

The means of transport can be any means of transport that carries passengers, in which means of transport the passenger compartment temperature is regulated and is to be as uniform as possible. The means of transport can thus be a bus, a train, a ship or boat, or an aircraft.

In that each temperature zone comprises only one temperature sensor and only one control loop for regulating the temperature, it is possible, in particular, to save weight, installation expenditure and costs of temperature regulation.

According to one embodiment of the invention, the means of transport is an aircraft.

According to a further aspect of the invention, a method for regulating an air outlet temperature of an air distribution system in a passenger compartment of a means of transport, as described above and below, is stated, wherein the air distribution system comprises a control unit, wherein the passenger compartment comprises at least one temperature zone, which at least one temperature zone comprises a multitude of air outlets, which multitude of air outlets share a common air supply, wherein the first temperature region is designed to receive a first heat load, and the second temperature region is designed to receive a second heat load, which first heat load differs from the second heat load, wherein the air distribution system comprises at least one heating element, wherein the at least one heating element is associated with an air outlet and is designed to heat the air flowing from the air outlet, which one air outlet is arranged in that temperature region of the first temperature region and of the second temperature region which comprises a lower heat load, wherein the control unit is designed to determine a temperature in each temperature zone and to calculate a heating energy for the at least one heating element, wherein a first group of the air outlets in the first temperature region is designed to output air of a first air outlet temperature to the passenger compartment, and wherein a second group of the air outlets in the second temperature region is designed to output air of a second air outlet temperature to the passenger compartment, wherein the method comprises the following step: calculating the heating energy for the at least one heating element in the air outlet, wherein the at least one heating element is designed to influence the air outlet temperature at the air outlet, wherein calculating the heating energy takes place in such a manner that the temperature in the temperature zone is as uniform as possible.

Thus, the method as described above and below ensures that despite different heat loads the temperature within a temperature zone in several temperature regions is kept constant in that the air outlet temperature of the air outlets in the temperature regions is adjusted in that the heating energy of the heating elements is calculated correspondingly.

According to one embodiment of the invention, the method further comprises the following steps: determining a first air outlet temperature in a first temperature zone of the at least one temperature zone; determining a second air outlet temperature in a second temperature zone of the at least one temperature zone; calculating the heating energy of the at least one heating element in the first temperature region of the first temperature zone by means of the first air outlet temperature and of the second air outlet temperature; and outputting the heating energy to the at least one heating element.

In particular, the temperature in the first temperature zone in an individual temperature region can be determined by at least two temperature regions of the first temperature zone. Subsequently the heating energy for adjusting the air outlet temperature in a further temperature region of the first temperature zone can be determined in that the difference in the air outlet temperature with regard to a second temperature zone is determined, and from this difference in the air outlet temperature the required heating energy for the heating elements of the temperature region with the lower heat load within the first temperature zone is determined.

According to a further embodiment of the invention, the first air outlet temperature is determined in the second temperature region of the first temperature zone.

In this arrangement the second temperature region of the first temperature zone can comprise a higher heat load than the first temperature region of the first temperature zone, and consequently, in the first temperature region, in order to increase the air outlet temperature therein, the heating energy is correspondingly increased in order to achieve a uniform temperature in the first temperature zone.

According to a further embodiment of the invention, calculation of the heating energy takes place with the use of the difference between the first air outlet temperature and the second air outlet temperature.

In other words this means that the first temperature zone comprises, for example, economy class seating configuration in the second temperature region, and business class seating configuration in the first temperature region, which due to different passenger densities in these temperature regions results in different heat loads. If the ambient temperature in the second temperature region is then measured and adjusted by means of the control loop in order to achieve a predetermined ambient temperature, the air outlet temperature in the first temperature region can be too low in order to, based on the low heat load in that region, achieve the same ambient temperature. Thus, in the first temperature region additional heating energy for the heating elements is then required, and consequently the air outlet temperature in the first temperature region is higher than in the second temperature region.

The additional heating energy is determined in that the air outlet temperature of a second temperature zone is used, which second temperature zone comprises business class seating configuration. Since this region requires a higher air outlet temperature, when compared to economy class, for the same ambient temperature to be achieved, the difference in the air outlet temperature between business class and economy class can be determined as the difference between the respective air outlet temperatures, and from this difference in turn the additional heating energy necessary for increasing the air outlet temperature in the first temperature region, i.e. in the business class region, of the first temperature zone can be determined.

According to a further embodiment of the invention, the method furthermore comprises the step of: determining the temperature in each temperature zone of the at least one temperature zone or of the multitude of temperature zones, wherein in each case the temperature in that temperature region of each temperature zone is determined, in which temperature region the highest heat load is present, in particular the highest heat load within said temperature zone.

According to a further aspect of the invention, a computer program element for controlling an air distribution system as described above and below is stated, which computer program element is designed to implement the method as described above and below when said computer program element is executed on a processor of a control unit of the air distribution system.

According to a further aspect of the invention, a computer-readable medium comprising a computer program element as described above and below is stated. The computer-readable medium can, for example, be a hard disc, a removable or permanent memory module, a diskette, a CD-ROM, a DVD and any other writable or merely readable medium that is suitable for containing a computer program element, and to make it available to a processor of an arithmetic unit for readout.

Below, exemplary embodiments of the invention are described with reference to the drawings.

### Brief description of the drawings

Fig. 1 shows a passenger compartment with an air distribution system for a means of transport according to one exemplary embodiment of the invention.
Fig. 2 shows a temperature zone of a passenger compartment according to a further exemplary embodiment of the invention.
Fig. 2A shows a temperature zone of a passenger compartment according to a further exemplary embodiment of the invention.
Fig. 3 shows a passenger compartment with a multitude of temperature zones and temperature regions according to a further exemplary embodiment of the invention.
Fig. 4 shows an aircraft comprising a passenger compartment with an air distribution system according to a further exemplary embodiment of the invention.
Fig. 5 shows a method for regulating an air outlet temperature of an air distribution system for a passenger compartment according to a further exemplary embodiment of the invention.
Fig. 6 shows a computer-readable medium according to a further exemplary embodiment of the invention.

### Detailed description of exemplary embodiments

The illustrations in the figures are diagrammatic and not to scale.

If in the following description of the figures the same reference characters are used, they relate to identical or similar elements.

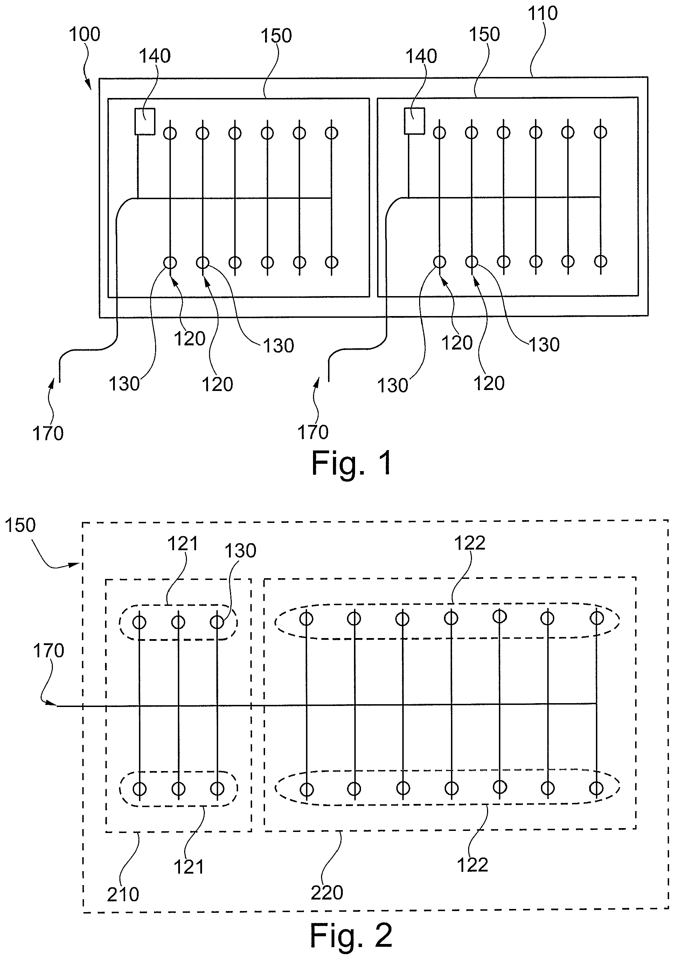

Fig. 1 shows a passenger compartment 110 with an air distribution system 100 or an air distribution system 100 for a passenger compartment 110 according to one exemplary embodiment of the invention. The passenger compartment 110 is divided into two temperature zones 150, wherein each temperature zone comprises a multitude of air outlets 120 that are connected to a shared air supply 170 or are supplied with air by means of this air supply.

In order to bring the temperature in a temperature zone 150 to a desired value or keep it at this value or stabilize it, the air distribution system 100 comprises a control unit 140 that is designed to control heating elements 130 in the air outlets 120 in such a manner that the heating elements, by way of a variable supply of heating energy, heat the air that flows from the air outlet into the passenger compartment.

In order to determine the heating energy for the heating elements, in each temperature zone a temperature sensor (for the sake of clarity not shown in the drawing) is arranged which transmits the measured temperature to the control unit.

Although Fig. 1 shows a control unit in each temperature zone, it is likewise possible for a single control unit to monitor several temperature zones and to regulate their temperatures or the supply of heating energy to the heating elements.

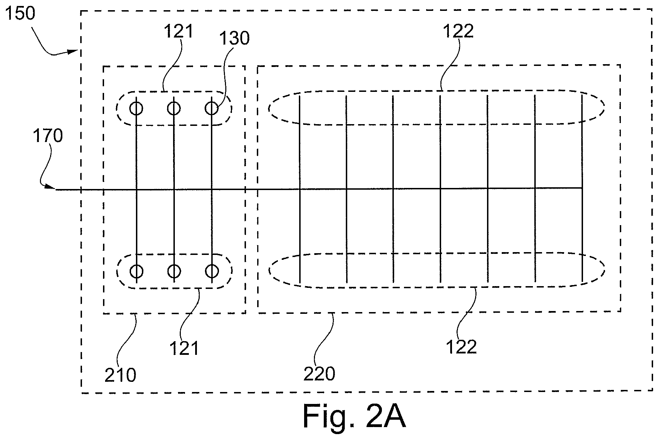

Fig. 2 shows a temperature zone 150 with a first temperature region 210 and a second temperature region 220. The air outlets 120 are supplied with air by way of the shared air supply 170, wherein during flowing from the air outlets 120 into the passenger compartment the air is heated by a heating element 130.

If the first temperature region 210 comprises a heat load that differs from the heat load in the second temperature region 220, the heating elements of the air outlets of the first group 121 need to be supplied with heating energy that differs from that of the heating elements of the air outlets of the second group 122.

The different heating energy for the heating elements of the first group 121 and of the second group 122 is determined in that in a single one of the temperature regions 210, 220 the temperature is measured by means of a temperature sensor, and the heat load in the first temperature region 210 and in the second temperature region 220 is determined.

In this manner a difference in the heating load between the first temperature region 210 and the second temperature region 220 can be determined and by way of the known temperature in one of the temperature regions the required heating energy for the heating elements in the other temperature region can be determined in order to obtain a uniform temperature in the entire temperature zone 150 despite different heat loads in the temperature regions 210, 220.

The required heating output for balancing the various heat loads in the temperature regions results from the mass flow of the air flowing from the air outlet, and from the difference in the heat load or from the temperature difference in the unheated state between the temperature regions.

The mass flow of the air, in turn, results from the density of the air and the latter's volume flow, wherein the density in turn results from the air pressure in the passenger compartment and from the air temperature in the air supply.

Fig. 2A shows a temperature zone 150 with a first temperature region 210 and a second temperature region 220, wherein in each case only the air outlets in the first temperature region 210 comprise a heating element 130. In case the heat load in the first temperature region 210 is lower than in the second temperature region 220, heating elements 130 are provided in the air outlets of the first group 121 of air outlets so that during the supply of the heating elements with heating energy the air flowing out in the first temperature region 210 is warmer than the air flowing from the air outlets of the second group 122.

In this arrangement the heating energy, which may be required, for the heating elements is calculated as described in detail further above.

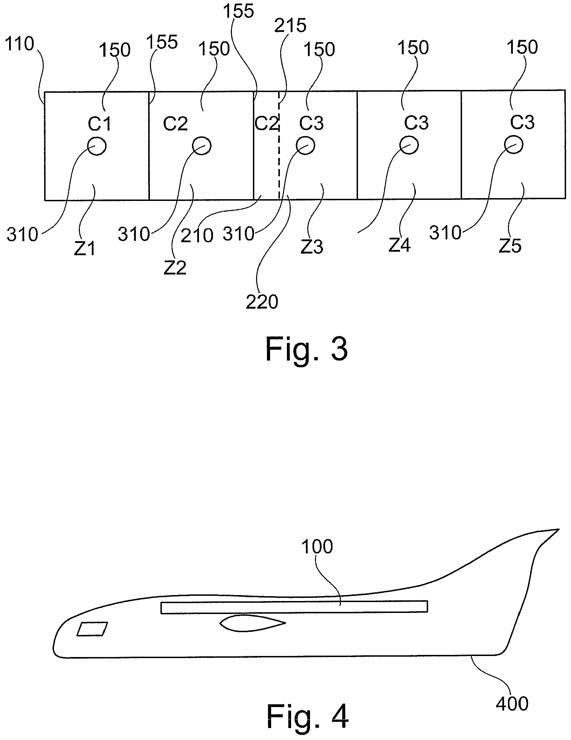

Fig. 3 shows a passenger compartment 110 with five temperature zones 150 Z1 to Z5. In each case between two temperature zones 150 there is a temperature zone boundary 155, and each temperature zone has a temperature sensor 310.

In the passenger compartment 110 there are three different seating configurations C1, C2 and C3. The seating configuration C1 can, for example, correspond to first class in a passenger cabin of an aircraft; C2 can correspond to the seating configuration in business class; and C3 to the seating configuration in economy class.

The different seating configurations in each case comprise individual seat spacing, wherein in the region of each seating configuration there is a different passenger density. The different passenger density results in different heat loads, i.e. for example a different quantity of heat emitted to the environment as a result of passengers' body warmth. Depending on the heat load, in the region of different seating configurations differently heated air needs to flow from the air outlets into the passenger compartment in order to achieve the same temperature in the region of different seating configurations.

Now if a change in the seating configuration occurs precisely at a temperature zone boundary 155, this does not pose a problem for temperature regulation. This situation is shown in zones Z1 and Z2 with the seating configurations C1 and C2. Temperature zone Z1, just like Z2, has a temperature sensor of its own which acquires the cabin temperature current at that time in the respective temperature zone and transmits it to the control unit so that the control unit can, if necessary, increase the heating energy or the air outlet temperature in too cold a temperature zone, or can cause the aforesaid to be increased.

However, if a change in the seating configurations within a temperature zone takes place, this can result in different temperatures in the region of the different seating configurations, namely depending on the placement of the temperature sensor. This situation is shown in temperature zone Z3 in which the seating configurations C2 and C3 exist. This results in the temperature zone Z3 comprising a first temperature region 210 and a second temperature region 220, wherein a temperature region boundary 215 passes precisely between the seating configurations C2 and C3, because this is where the passenger density changes.

If the temperature sensor is located in a temperature region with a high heat load, and if the temperature in this region corresponds to the setpoint value of the temperature, no heating takes place, which, however, in a temperature region with a low heat load in the same zone can result in the temperature being too low therein. Conversely, an arrangement of the temperature sensor in the temperature region with a low heat load can result in the temperature region with a high heat load being heated too much.

If the heat load in one temperature zone differs from the heat load in some other temperature zone, uniform temperature in the entire passenger cabin can be achieved in that in the temperature zone with a lower heat load air that has been heated more flows from the air outlets, i.e. that the heating elements in the temperature zone with a lower heat load are operated with more heating energy or the air outlet temperature is higher. In this manner a situation is achieved in which despite a lower heat load the same temperature prevails as is the case in a temperature zone with a higher heat load.

Thus the situation in the temperature zone Z3 is as shown in the temperature zone 150 in Fig. 2. In the region of the seating configuration C2 there is a first temperature region 210, and in the region of the seating configuration C3 there is a second temperature region 220.

Corresponding to the heat load in the temperature regions 210, 220 or in the region of the seating configurations C2, C3, within the same temperature zone Z3 the air flowing from the air outlets of the first group 210 and of the second group 220 needs to be heated differently in order to attain the same temperature within the temperature zone Z3. However, since only one temperature sensor 310 is arranged in the temperature zone Z3 and in the temperature region 220, a differing required heating energy in one temperature region 210 can thus be determined by way of the differing or different heat load between the temperature regions 210, 220 in that the required additional heating energy for business class in the temperature zone Z3 is determined from a difference in the air outlet temperature between the temperature zones Z3 (business class with economy class mixed, wherein the temperature sensor is arranged in the region of economy class, and the air outlet temperature is thus guided by the heating requirements of this class) and Z2.

As already explained, the difference in the heat load can be a predetermined value that is set at the control unit, or the difference in the heat load or the heat load in the two temperature regions is determined with reference to passenger density and/or the seating configuration and/or constructional specifications such as, for example, cabin insulation. In the determination of the additionally required heating energy from the difference in the air outlet temperature between two temperature zones, the difference in the heat load between two temperature zones is indirectly determined by way of the different actual air outlet temperature at the time. There is thus no need to explicitly determine the heat load.

Fig. 4 shows an aircraft 400 with a passenger compartment 110 with an air distribution system 100 according to a further exemplary embodiment of the invention.

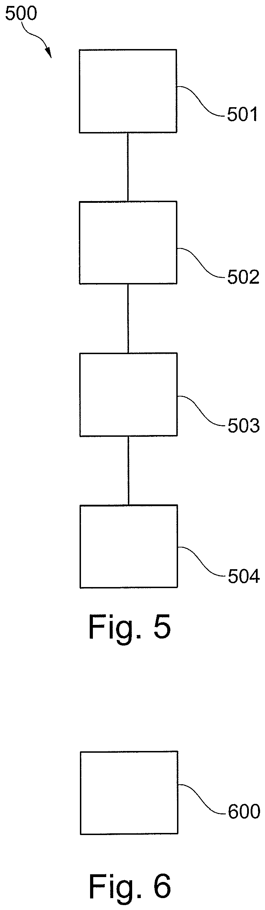

Fig. 5 shows a diagrammatic overview of a method 500 for regulating an air outlet temperature of an air distribution system in a passenger compartment according to a further exemplary embodiment of the invention.

In a step 501 a heating energy for the heating element in the air outlet is calculated as described above. Thereafter, in step 502 in a first temperature zone in the passenger compartment a first air outlet temperature is determined. In step 503 a second air outlet temperature in a second temperature zone is determined. Then in step 504 a heating energy for the heating elements in the first temperature region of the first temperature zone is calculated as described above, with reference to the first air outlet temperature and the second air outlet temperature. The additional heating energy calculated in this manner is then output to the heating element, or the heating element is operated with the calculated heating energy, in order to correspondingly heat the air flowing from the air outlet.

Thus, the method 500 may make it possible, in a passenger compartment with a multitude of temperature zones, of which each temperature zone can comprise several temperature regions, to regulate a temperature in such a manner that the temperature in the entire temperature zone is as uniform as possible, wherein in a temperature zone only one temperature sensor is arranged.

Fig. 6 shows a diagrammatic view of a computer-readable medium with a computer program element for implementing a method, described above, on a control unit of a passenger compartment, described above, with an air distribution system.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. A passenger compartment (110) with an air distribution system (100) for a means of transport (400), with the air distribution system comprising:
a control unit (140);
a multitude of air outlets (120); and
at least one heating element (130);
wherein the passenger compartment comprises at least one temperature zone (150) with a first temperature region (210) and a second temperature region (220);
wherein the first temperature region is designed to receive a first heat load, and the second temperature region is designed to receive a second heat load, which first heat load differs from the second heat load;
wherein the at least one temperature zone (150) comprises the multitude of air outlets (120), which multitude of air outlets share a common air supply (170);
wherein the at least one heating element (130) is associated with one of the multitude of air outlets in order to heat the air flowing from the one air outlet, which one air outlet is arranged in that temperature region of the first temperature region and of the second temperature region, which temperature region comprises a lower heat load than the other temperature region;
wherein the control unit is designed to determine a temperature in one of the first temperature region and the second temperature region of the at least one temperature zone, the temperature being measured by means of a temperature sensor, and to determine a heating energy for the at least one heating element in such a manner that in the at least one temperature zone an essentially uniform temperature is achieved;
wherein a first group (121) of the air outlets in the first temperature region (210) is designed to output air of a first air outlet temperature to the passenger compartment; and
wherein a second group (122) of the air outlets in the second temperature region (220) is designed to output air of a second air outlet temperature to the passenger compartment, **characterized in that**
the heating energy is calculated by the determined temperature in one of the first temperature region and the second temperature region and the difference between the first heat load and the second heat load.

2. The passenger compartment of claim 1,
further comprising at least one temperature sensor (310);
wherein each one of the at least one temperature zones (150) is associated with precisely one temperature sensor designed to measure the temperature in the temperature zone associated with it, and to transmit the result to the control unit.

3. The passenger compartment of claim 2,
wherein the temperature sensor that is associated with the at least one temperature zone is arranged in the second temperature region of this temperature zone;
wherein the second temperature region has a higher heat load than the first temperature region of this temperature zone.

4. The passenger compartment of any one of the preceding claims,
wherein a first temperature zone of the at least one temperature zone and a second temperature zone of the at least one temperature zone in each case comprise a multitude of air outlets;
wherein the first temperature region of the first temperature zone adjoins the second temperature zone;
wherein the first heat load in the first temperature region of the first temperature zone corresponds to the heat load in the second temperature zone and is lower than the second heat load of the second temperature region of the first temperature zone, and the heating energy in the first temperature region of the first temperature zone results from a difference in heat load between the second heat load of the second temperature region of the first temperature zone and the heat load of the second temperature zone.

5. The passenger compartment of claim 4,
wherein the control unit is designed to determine the difference in heat load as the difference between the second air outlet temperature in the second temperature region of the first temperature zone and the air outlet temperature in the second temperature zone.

6. A means of transport (400) with a passenger compartment (110) of any one of claims 1 to 5.

7. The means of transport of claim 6,
wherein the means of transport is an aircraft.

8. A method (500) for regulating an air outlet temperature of an air distribution system (100) in a passenger compartment (110) of a means of transport (400), with the air distribution system comprising a control unit (140);
wherein the passenger compartment comprises at least one temperature zone (150) with a first temperature region (210) and a second temperature region (220), which at least one temperature zone comprises a multitude of air outlets (120), which multitude of air outlets share a common air supply (170);
wherein the first temperature region is designed to receive a first heat load, and the second temperature region is designed to receive a second heat load, which first heat load differs from the second heat load;
wherein the air distribution system comprises at least one heating element (130);
wherein the at least one heating element (130) is associated with an air outlet and is designed to heat the air flowing from the air outlet, which one air outlet is arranged in that temperature region of the first temperature region and of the second temperature region which comprises a lower heat load;
wherein the control unit is designed to determine a temperature in one of the first temperature region and the second temperature region of each temperature zone, the temperature being measured by means of a temperature sensor and to calculate a heating energy for the at least one heating element;
wherein a first group (121) of the air outlets in the first temperature region (210) is designed to output air of a first air outlet temperature to the passenger compartment; and
wherein a second group (122) of the air outlets in the second temperature region (220) is designed to output air of a second air outlet temperature to the passenger compartment;
wherein the at least one heating element is designed to influence the air outlet temperature at the air outlets, wherein calculating the heating energy takes place in such a manner that in the first temperature zone a temperature is achieved that is essentially uniform, **characterized in** comprising the following step:
calculating (504) the heating energy for the at least one heating element in the air outlet by the determined temperature in one of the first temperature region and the second temperature region and the difference between the first heat load and the second heat load.

9. The method of claim 8,
further comprising the steps of:
determining (502) a first air outlet temperature in a first temperature zone of the at least one temperature zone;
determining (503) a second air outlet temperature in a second temperature zone of the at least one temperature zone;
calculating the heating energy of the at least one heating element in the first temperature region of the first temperature zone by means of the first air outlet temperature and of the second air outlet temperature;
outputting (504) the heating energy to the at least one heating element.

10. The method of claim 9,
wherein the first air outlet temperature is determined in the second temperature region of the first temperature zone.

11. The method of claim 9 or 10,
wherein calculation of the heating energy takes place with the use of the difference between the first air outlet temperature and the second air outlet temperature.

12. The method of any one of claims 8 to 11,
further comprising the step of:
determining the temperature in each temperature zone of the at least one temperature zone;
wherein in each case the temperature in that temperature region of each temperature zone is determined, in which temperature region the highest heat load of the temperature zone is present.

13. A computer program element for controlling an air distribution system of any one of claims 1 to 5, which computer program element is designed to direct the air distribution system to carry out the method of any one of claims 8 to 12 when said computer program element is executed on a processor of a control unit of the air distribution system.

14. A computer-readable medium (600) comprising the computer program element of claim 13.

## Patentansprüche

1. Passagierraum (110) mit einem Luftverteilungssystem (100) für ein Transportmittel (400), wobei das Luftverteilungssystem Folgendes umfasst:
eine Regeleinheit (140);
eine Vielzahl von Luftauslässen (120); und
mindestens ein Heizelement (130);
wobei der Passagierraum mindestens eine Temperaturzone (150) mit einer ersten Temperaturregion (210) und einer zweiten Temperaturregion (220) umfasst;
wobei die erste Temperaturregion dazu ausgelegt ist, eine erste Heizlast zu empfangen, und die zweite Temperaturregion dazu ausgelegt ist, eine zweite Heizlast zu empfangen, wobei sich die erste Heizlast von der zweiten Heizlast unterscheidet;
wobei die mindestens eine Temperaturzone (150) die Vielzahl von Luftauslässen (120) umfasst, wobei die Vielzahl von Luftauslässen eine gemeinsame Luftversorgung (170) teilt;
wobei das mindestens eine Heizelement (130) einem der Vielzahl von Luftauslässen zugeordnet ist, um die von dem einen Luftauslass strömende Luft zu erwärmen, wobei ein Luftauslass in jener Temperaturregion von der ersten Temperaturregion und von der zweiten Temperaturregion angeordnet ist, die eine im Vergleich zu der jeweils anderen Temperaturregion geringere Heizlast umfasst;
wobei die Regeleinheit dazu ausgelegt ist, eine Temperatur in der ersten Temperaturregion oder der zweiten Temperaturregion der mindestens einen Temperaturzone zu bestimmen, wobei die Temperatur mittels eines Temperatursensors gemessen wird, und eine Heizenergie für das mindestens eine Heizelement in einer solchen Weise zu bestimmen, dass in der mindestens einen Temperaturzone eine im Wesentlichen einheitliche Temperatur erreicht wird;
wobei eine erste Gruppe (121) der Luftauslässe in der ersten Temperaturregion (210) dazu ausgelegt ist, Luft von einer ersten Luftauslasstemperatur an den Passagierraum abzugeben; und
wobei eine zweite Gruppe (122) der Luftauslässe in der zweiten Temperaturregion (220) dazu ausgelegt ist, Luft von einer zweiten Luftauslasstemperatur an den Passagierraum abzugeben, **dadurch gekennzeichnet, dass**
die Heizenergie durch die festgestellte Temperatur in einer von der ersten Temperaturregion und der zweiten Temperaturregion und die Differenz zwischen der ersten Heizlast und der zweiten Heizlast berechnet wird.

2. Passagierraum nach Anspruch 1,
ferner umfassend mindestens einen Temperatursensor (310) ;
wobei jede der mindestens einen Temperaturzone (150) genau einem Temperatursensor zugeordnet ist, der dazu ausgelegt ist, die Temperatur in der ihm zugeordneten Temperaturzone zu messen und das Ergebnis an die Regeleinheit zu übertragen.

3. Passagierraum nach Anspruch 2,
wobei der Temperatursensor, welcher der mindestens einen Temperaturzone zugeordnet ist, in der zweiten Temperaturregion dieser Temperaturzone angeordnet ist;
wobei die zweite Temperaturregion eine höhere Heizlast als die erste Temperaturregion dieser Temperaturzone hat.

4. Passagierraum nach einem der vorangehenden Ansprüche,
wobei eine erste Temperaturzone von der mindestens einen Temperaturzone und eine zweite Temperaturzone von der mindestens einen Temperaturzone in jedem Fall eine Vielzahl von Luftauslässen umfassen;
wobei die erste Temperaturregion der ersten Temperaturzone an die zweite Temperaturzone angrenzt;
wobei die erste Heizlast in der ersten Temperaturregion der ersten Temperaturzone mit der Heizlast in der zweiten Temperaturzone korrespondiert und niedriger als die zweite Heizlast der zweiten Temperaturregion der ersten Temperaturzone ist, und die Heizenergie in der ersten Temperaturregion der ersten Temperaturzone aus einer Differenz in der Heizlast zwischen der zweiten Heizlast der zweiten Temperaturregion der ersten Temperaturzone und der Heizlast der zweiten Temperaturzone resultiert.

5. Passagierraum nach Anspruch 4,
wobei die Regeleinheit dazu ausgelegt ist, die Differenz in der Heizlast als die Differenz zwischen der zweiten Luftauslasstemperatur in der zweiten Temperaturregion der ersten Temperaturzone und der Luftauslasstemperatur in der zweiten Temperaturzone zu bestimmen.

6. Transportmittel (400) mit einem Passagierraum (110) nach einem der Ansprüche 1 bis 5.

7. Transportmittel nach Anspruch 6,
wobei das Transportmittel ein Flugzeug ist.

8. Verfahren (500) zum Regulieren einer Luftauslasstemperatur eines Luftverteilungssystems (100) in einem Passagierraum (110) eines Transportmittels (400), wobei das Luftverteilungssystem eine Regeleinheit (140) umfasst;
wobei der Passagierraum mindestens eine Temperaturzone (150) mit einer ersten Temperaturregion (210) und einer zweiten Temperaturregion (220) umfasst, wobei mindestens eine Temperaturzone eine Vielzahl von Luftauslässen (120) umfasst, wobei die Vielzahl von Luftauslässen eine gemeinsame Luftversorgung (170) teilt;
wobei die erste Temperaturregion dazu ausgelegt ist, eine erste Heizlast zu empfangen, und die zweite Temperaturregion dazu ausgelegt ist, eine zweite Heizlast zu empfangen, wobei sich die erste Heizlast von der zweiten Heizlast unterscheidet;
wobei das Luftverteilungssystem mindestens ein Heizelement (130) umfasst;
wobei das mindestens eine Heizelement (130) einem Luftauslass zugeordnet und dazu ausgelegt ist, die aus dem Luftauslass strömende Luft zu erwärmen, wobei ein Luftauslass in jener Temperaturregion von der ersten Temperaturregion und von der zweiten Temperaturregion angeordnet ist, die eine geringere Heizlast umfasst;
wobei die Regeleinheit dazu ausgelegt ist, eine Temperatur in einer von der ersten Temperaturregion und der zweiten Temperaturregion jeder Temperaturzone zu bestimmen, wobei die Temperatur mittels eines Temperatursensors gemessen wird, und eine Heizenergie für das mindestens eine Heizelement zu berechnen;
wobei eine erste Gruppe (121) der Luftauslässe in der ersten Temperaturregion (210) dazu ausgelegt ist, Luft von einer ersten Luftauslasstemperatur an den Passagierraum abzugeben; und
wobei eine zweite Gruppe (122) der Luftauslässe in der zweiten Temperaturregion (220) dazu ausgelegt ist, Luft von einer zweiten Luftauslasstemperatur an den Passagierraum abzugeben;
wobei das mindestens eine Heizelement dazu ausgelegt ist, die Luftauslasstemperatur an den Luftauslässen zu beeinflussen, wobei das Berechnen der Heizenergie in einer solchen Weise stattfindet, dass in der ersten Temperaturzone eine Temperatur erreicht wird, die im Wesentlichen einheitlich ist, **dadurch gekennzeichnet, dass** es den folgenden Schritt umfasst:
Berechnen (504) der Heizenergie für das mindestens eine Heizelement in dem Luftauslass durch die bestimmte Temperatur in einer von der ersten Temperaturregion und der zweiten Temperaturregion und die Differenz zwischen der ersten Heizlast und der zweiten Heizlast.

9. Verfahren nach Anspruch 8,
das ferner folgende Schritte umfasst:
Bestimmen (502) einer ersten Luftauslasstemperatur in einer ersten Temperaturzone der mindestens einen Temperaturzone;
Bestimmen (503) einer zweiten Luftauslasstemperatur in einer zweiten Temperaturzone der mindestens einen Temperaturzone;
Berechnen der Heizenergie des mindestens einen Heizelements in der ersten Temperaturregion der ersten Temperaturzone mittels der ersten Luftauslasstemperatur und der zweiten Luftauslasstemperatur;
Ausgeben (504) der Heizenergie an das mindestens eine Heizelement.

10. Verfahren nach Anspruch 9,
wobei die erste Luftauslasstemperatur in der zweiten Temperaturregion der ersten Temperaturzone bestimmt wird.

11. Verfahren nach Anspruch 9 oder 10,
wobei das Berechnen der Heizenergie mit der Verwendung der Differenz zwischen der ersten Luftauslasstemperatur und der zweiten Luftauslasstemperatur stattfindet.

12. Verfahren nach einem der Ansprüche 8 bis 11,
das ferner folgenden Schritt umfasst:
Bestimmen der Temperatur in jeder Temperaturzone der mindestens einen Temperaturzone;
wobei in jedem Fall die Temperatur in jener Temperaturregion jeder Temperaturzone bestimmt wird, in der die höchste Heizlast der Temperaturzone präsent ist.

13. Computerprogrammelement zum Regeln eines Luftverteilungssystems nach einem der Ansprüche 1 bis 5, wobei das Computerprogrammelement dazu ausgelegt ist, das Luftverteilungssystem anzuweisen, das Verfahren nach einem der Ansprüche 8 bis 12 auszuführen, wenn das Computerprogrammelement auf einem Prozessor einer Regeleinheit des Luftverteilungssystems ausgeführt wird.

14. Computerlesbares Medium (600), welches das Computerprogrammelement aus Anspruch 13 umfasst.

## Revendications

1. Cabine passagers (110) avec un système de distribution d'air (100) pour un moyen de transport (400), le système de distribution d'air comprenant :
une unité de commande (140) ;
une multitude de sorties d'air (120) ; et
au moins un élément chauffant (130) ;
la cabine passagers comprenant au moins une zone de température (150) avec une première région de température (210) et une deuxième région de température (220) ;
la première région de température étant conçue pour recevoir une première charge thermique, et la deuxième région de température étant conçue pour recevoir une deuxième charge thermique, laquelle première charge thermique diffère de la deuxième charge thermique ;
l'au moins une zone de température (150) comprenant la multitude de sorties d'air (120), laquelle multitude de sorties d'air partagent une alimentation en air commune (170) ;
l'au moins un élément chauffant (130) étant associé à une sortie d'air donnée de la multitude de sorties d'air afin de chauffer l'air circulant depuis la sortie d'air donnée, laquelle sortie d'air donnée est disposée dans une région de température donnée parmi la première région de température et la deuxième région de température, laquelle région de température comprend une plus faible charge thermique que l'autre région de température ;
l'unité de commande étant conçue pour déterminer une température dans la première région de température où la deuxième région de température de l'au moins une zone de température, la température étant mesurée au moyen d'un capteur de température, et pour déterminer une énergie de chauffage pour l'au moins un élément chauffant de manière à ce que dans l'au moins une zone de température, une température essentiellement uniforme soit atteinte ;
un premier groupe (121) des sorties d'air dans la première région de température (210) étant conçu pour délivrer de l'air à une première température de sortie d'air à la cabine passagers ; et
un deuxième groupe (122) des sorties d'air dans la deuxième région de température (220) étant conçu pour délivrer de l'air à une deuxième température de sortie d'air à la cabine passagers, **caractérisé en ce que**
l'énergie de chauffage est calculée par la température déterminée dans la première région de température ou la deuxième région de température et la différence entre la première charge thermique et la deuxième charge thermique.

2. Cabine passagers de la revendication 1,
comprenant en outre au moins un capteur de température (310) ;
dans laquelle chacune de l'au moins une zone de température (150) est associée à précisément un capteur de température conçu pour mesurer la température dans la zone de température qui lui est associée, et pour transmettre le résultat à l'unité de commande.

3. Cabine passagers de la revendication 2,
dans laquelle le capteur de température qui est associé à l'au moins une zone de température est disposé dans la deuxième région de température de cette zone de température ;
dans laquelle la deuxième région de température a une plus forte charge thermique que la première région de température de cette zone de température.

4. Cabine passagers de l'une quelconque des revendications précédentes,
dans laquelle une première zone de température de l'au moins une zone de température et une deuxième zone de température de l'au moins une zone de température comprennent dans chaque cas une multitude de sorties d'air ;
dans laquelle la première région de température de la première zone de température jouxte la deuxième zone de température ;
dans laquelle la première charge thermique dans la première région de température de la première zone de température correspond à la charge thermique dans la deuxième zone de température et est inférieure à la deuxième charge thermique de la deuxième région de température de la première zone de température, et l'énergie de chauffage dans la première région de température de la première zone de température résulte d'une différence de charge thermique entre la deuxième charge thermique de la deuxième région de température de la première zone de température et la charge thermique de la deuxième zone de température.

5. Cabine passagers de la revendication 4,
dans laquelle l'unité de commande est conçue pour déterminer la différence de charge thermique comme la différence entre la deuxième température de sortie d'air dans la deuxième région de température de la première zone de température et la température de sortie d'air dans la deuxième zone de température.

6. Moyen de transport (400) avec une cabine passagers (110) de l'une quelconque des revendications 1 à 5.

7. Moyen de transport de la revendication 6,
le moyen de transport étant un aéronef.

8. Procédé (500) de régulation d'une température de sortie d'air d'un système de distribution d'air (100) dans une cabine passagers (110) d'un moyen de transport (400), le système de distribution d'air comprenant une unité de commande (140) ;
la cabine passagers comprenant au moins une zone de température (150) avec une première région de température (210) et une deuxième région de température (220), laquelle au moins une zone de température comprend une multitude de sorties d'air (120), laquelle multitude de sorties d'air partagent une alimentation en air commune (170) ;
la première région de température étant conçue pour recevoir une première charge thermique, et la deuxième région de température étant conçue pour recevoir une deuxième charge thermique, laquelle première charge thermique diffère de la deuxième charge thermique ;
le système de distribution d'air comprenant au moins un élément chauffant (130) ;
l'au moins un élément chauffant (130) étant associé à une sortie d'air et étant conçu pour chauffer l'air circulant depuis la sortie d'air, laquelle sortie d'air est disposée dans la région de température parmi la première région de température et la deuxième région de température qui comprend une plus faible charge thermique ;
l'unité de commande étant conçue pour déterminer une température dans la première région de température ou la deuxième région de température de chaque zone de température, la température étant mesurée au moyen d'un capteur de température, et pour calculer une énergie de chauffage pour l'au moins un élément chauffant ;
un premier groupe (121) des sorties d'air dans la première région de température (210) étant conçu pour délivrer de l'air à une première température de sortie d'air à la cabine passagers ; et
un deuxième groupe (122) des sorties d'air dans la deuxième région de température (220) étant conçu pour délivrer de l'air à une deuxième température de sortie d'air à la cabine passagers ;
l'au moins un élément chauffant étant conçu pour influencer la température de sortie d'air aux sorties d'air, le calcul de l'énergie de chauffage se faisant de manière à ce que, dans la première zone de température, une température qui est essentiellement uniforme soit atteinte, **caractérisé en ce qu'**il comprend l'étape suivante :
calcul (504) de l'énergie de chauffage pour l'au moins un élément chauffant dans la sortie d'air par la température déterminée dans la première région de température ou la deuxième région de température et la différence entre la première charge thermique et la deuxième charge thermique.

9. Procédé de la revendication 8,
comprenant en outre les étapes de :
détermination (502) d'une première température de sortie d'air dans une première zone de température de l'au moins une zone de température ;
détermination (503) d'une deuxième température de sortie d'air dans une deuxième zone de température de l'au moins une zone de température ;
calcul de l'énergie de chauffage de l'au moins un élément chauffant dans la première région de température de la première zone de température au moyen de la première température de sortie d'air et de la deuxième température de sortie d'air ;
délivrance (504) de l'énergie de chauffage à l'au moins un élément chauffant.

10. Procédé de la revendication 9,
dans lequel la première température de sortie d'air est déterminée dans la deuxième région de température de la première zone de température.

11. Procédé de la revendication 9 ou 10,
dans lequel le calcul de l'énergie de chauffage se fait en utilisant la différence entre la première température de sortie d'air et la deuxième température de sortie d'air.

12. Procédé de l'une quelconque des revendications 8 à 11,
comprenant en outre l'étape de :
détermination de la température dans chaque zone de température de l'au moins une zone de température ;
dans lequel, dans chaque cas, la température dans une région de température donnée de chaque zone de température est déterminée, région de température dans laquelle la plus forte charge thermique de la zone de température est présente.

13. Élément de programme informatique destiné à commander un système de distribution d'air de l'une quelconque des revendications 1 à 5, lequel élément de programme informatique est conçu pour conduire le système de distribution d'air à réaliser le procédé de l'une quelconque des revendications 8 à 12 quand ledit élément de programme informatique est exécuté sur un processeur d'une unité de commande du système de distribution d'air.

14. Support lisible par ordinateur (600) comprenant l'élément de programme informatique de la revendication 13.
